# EUROPEAN PATENT SPECIFICATION

(11) **EP 1 278 790 B1**
(45) Date of publication and mention of the grant of the patent: **17.08.2005**
(21) Application number: 01922972.3
(22) Date of filing: 02.04.2001
(51) Int. Cl.: C08G 12/40, D21H 17/51

(54) **DRAINAGE AIDS IN PAPERMAKING**
ENTWÄSSERUNGSHILFSMITTEL FÜR DIE PAPIERERZEUGUNG
ADJUVANTS DE DRAINAGE DANS LA FABRICATION DU PAPIER

(30) Priority: 02.05.2000 US 563095
(43) Date of publication of application: 29.01.2003
(73) Proprietor: CYTEC TECHNOLOGY CORP., Wilmington, Delaware 19801 (US)
(72) Inventor: DE PIERNE, Otto, S., Norwalk, CT 06855 (US); HONIG, Dan, Stephen, New Canaan, CT 06840 (US)
(74) Representative: Bowman, Paul Alan
(86) International application number: PCT/US2001/010432
(87) International publication number: WO 2001/083885

(56) References cited:
- WO-A-96/30423
- US-A- 5 424 390
- US-A- 5 989 391

## Description

### BACKGROUND OF THE INVENTION

This invention concerns sulfonated polymers of an aminotriazine and an aldehyde, processes for makings these polymers, and methods of using these polymers as drainage aids in papermaking.

A variety of organic and inorganic materials are known to be useful as drainage aids in papermaking, see e.g. M. Norell, K. Johansson and M. Persson, "Retention and Drainage," in Papermaking Chemistry, ed. L. Neimo, Tappi Press, 1999, pp. 43-77. For instance, organic polymers are often used in papermaking to increase retention and/or drainage, see e.g. U.S. 5,567,277 and references discussed therein. Ionic organic polymer microbeads that provide superior retention/drainage performance are disclosed in U.S. 5,167,766; 5,171,808 and 5,274,055. Inorganic materials, e.g. alum, silica and bentonite, may be used alone or in combination with organic polymers, see e.g. U.S. 5,431,783 and references cited therein. However, there remains a need for additional products to improve papermaking.

It is known in the art that a multitude of reaction products may be produced by varying the reaction conditions, e.g., pH, pressure, temperature, time, ratios of reactants, etc. for the condensation reaction between an aminotriazine e.g. melamine, an aldehyde, e.g., formaldehyde, and a sulfite, e.g., from sodium bisulfite. Over the past 60 years, numerous examples of such aminotriazine/aldehyde/sulfite condensation products and processes have been reported, see e.g., U.S. 2,407,599; 2,412,855; 2,730,516; 2,863,842; 2,949,396; 3,941,734; 3,985,696; 4,430,469; 4,677,159; 4,820,766; 5,071,945; 5,424,390; 5,789,526; and EP 0 277 633 A2. The molecular weight of aminotriazine/aldehyde/sulfite condensation products is often increased or "advanced" by various methods, e.g., "acid-advancement" or "aminotriazine-advancement." Acid advancement takes place when the molecular weight of an aminotriazine/aldehyde/sulfite condensation product is increased under acidic conditions, without the use of additional aminotriazine. Aminotriazine advancement, e.g., melamine advancement takes place when the molecular weight of an aminotriazine/aldehyde/sulfite condensation product is increased by reaction with additional aminotriazine, e.g., melamine. Many of the references cited above disclose acid-advahced condensation products; examples of melamine-advanced condensation products are disclosed in U.S. 5,989,391 and WO 96/34027. For example, the reaction scheme below illustrates some of the chemistry that is believed to underlie known processes for making acid-advanced sulfonated melamine-formaldehyde polymer, see e.g., U.S. 4,430,469:

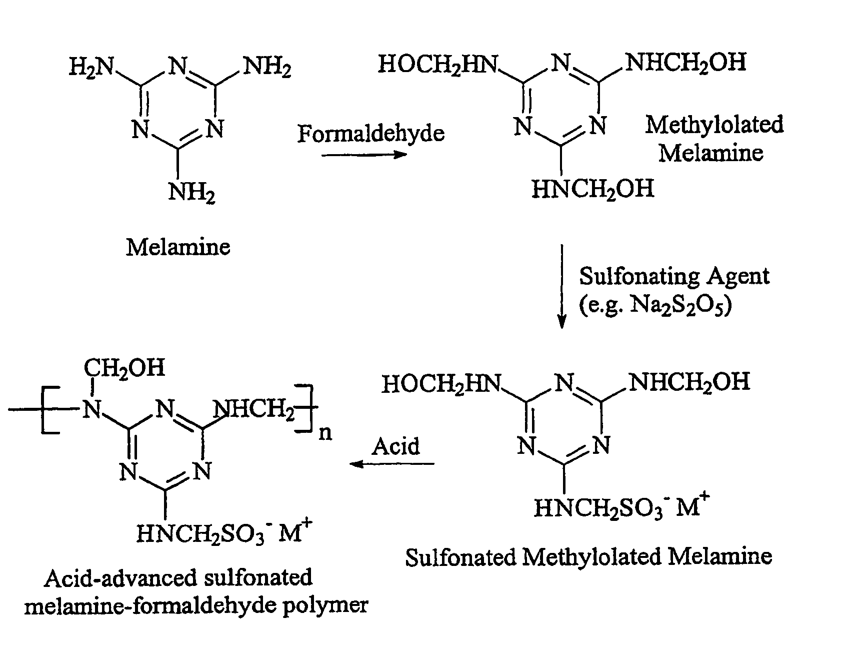

The use of acid-advanced condensation products as cement additives is well-known and products believed to be acid-advanced are commercially available. It is believed that acid-advanced condensation products are generally anionic, so that when they are absorbed onto the particles making up the wet cement mixture, they cause the particles to become negatively charged and thus to repel one another, see e.g. S.M. Lahalih et al. "Water-Soluble Sulfonated Amino-Formaldehyde Resins II Characteristics As Dispersing Agents," J. Appl. Polym. Sci., 33, 2997-3004 (1987) and references cited therein. Some references mention aminotriazine/aldehyde/sulfite condensation products in relation to papermaking, see e.g. U.S. 2,407,599; 2,863,842; 2,949,396; 4,181,567; and 4,840,705; as well as JP 02014096 and JP 07189178. However, the instant inventors have evaluated samples of commercially available aminotriazine/aldehyde/sulfite condensation products and have found that they provide generally inferior drainage performance. Aminotriazine/aldehyde/sulfite condensation products are also said to be useful for treating oil well drilling mud, see e.g. U.S. 2,730,516, and for improving the quality of building materials containing inorganic binders, see e.g. U.S. 4,430,469.

Recent reports have indicated that the retention/drainage performance of melamine-advanced aminotriazine/aldehyde/sulfite condensation products is superior to acid-advanced products. For instance, in WO 96/34027 and U.S. 5,989,391, better retention and drainage were reported using a melamine-advanced condensation product than an acid-advanced condensation product. However, the instant inventors have found the performance of these melamine-advanced condensation products to be generally inferior to commercially available retention/drainage aids. Thus, there remains a problem in that aminotriazine/aldehyde/sulfite condensation products are needed which are capable of providing retention and/or drainage performance in papermaking which approaches or exceeds the performance of existing retention/drainage aids.

Surprisingly, we have now discovered that certain novel aqueous compositions, comprised of a sulfonated polymer of an aminotriazine and an aldehyde, provide superior drainage in papermaking, as compared to aminotriazine/aldehyde/sulfite condensation products known in the art. Thus, the instant invention provides novel aqueous compositions, processes for making these compositions, and methods of using these compositions to provide superior drainage in papermaking.

### BRIEF SUMMARY OF THE INVENTION

In one embodiment of the instant invention, there is provided an aqueous composition comprised of a sulfonated polymer of an aminotriazine and an aldehyde, said composition having a total solids concentration in the range of about 15% to about 30%, by weight based on total weight of said composition, and a delta turbidity value of greater than zero, said delta turbidity value being determined by (1) measuring the turbidity of said composition at 25° C to obtain a first turbidity value, (2) diluting said composition with sufficient water to yield a second composition having a total solids concentration of 2%, by weight based on total weight of said second composition, (3) measuring the turbidity of said second composition at 25° C to obtain a second turbidity value, and (4) subtracting said first turbidity value from said second turbidity value.

In another embodiment of the instant invention, there is provided a process for making the compositions of the instant invention, comprising (a) heating and agitating a first mixture, made by intermixing water, aminotriazine, aldehyde, a first base, and a sulfite, in a aminotriazine:aldehyde molar ratio of about 1:2.9 to about 1:3.4 and a sulfite:aminotriazine molar ratio of about 0.9 to about 1.1, said first base being present in an amount effective to provide said first mixture with a pH in the range of about 10 to about 13, at a temperature in the range of about 60° to about 80°C for about 1 to about 2 hours, (b) intermixing acid with said first mixture to give a second mixture having a pH in the range of about 3 to about 4, (c) agitating said second mixture at a temperature in the range of about 50° to about 70°C until said second mixture has a bulk viscosity of about 15,000 mPa.s or greater, (d) adding a second base to said second mixture with agitation in an amount sufficient to form a third mixture having a pH of about 7 to about 10, (e) heating and agitating said third mixture at a temperature in the range of about 85° to about 95°C for about 15 to about 30 minutes, and (f) cooling said third mixture to ambient temperature.

In another embodiment of the instant invention, there is provided a method for making paper, comprising (i) providing an aqueous composition of the instant invention, (ii) providing a first pulp slurry, (iii) intermixing said composition with said first pulp slurry to form a second pulp slurry, and (iv) dewatering said second pulp slurry to form a sheet.

These and other embodiments are described in greater detail below.

### DETAILED DESCRIPTION OF THE INVENTION

The aqueous compositions of this invention are comprised of sulfonated polymers of an aminotriazine and an aldehyde. These compositions may be formed by the condensation in water of an aminotriazine and an aldehyde in the presence of a sulfite under the conditions described in greater detail below. The aminotriazine generally contains at least two amino groups, e.g., diaminotriazine or triaminotriazine, although mixtures containing small amounts of an aminotriazine containing only one amino group e.g., monoaminotriazine may be used. A preferred aminotriazine is melamine. Aldehydes useful in the instant invention include acetaldehyde and formaldehyde, preferably formaldehyde, most preferably aqueous formaldehyde containing 4% or more of methanol, by weight based on total weight.

Sulfite is an ion and may be HSO₃⁻ or SO₃²⁻. Convenient sources of sulfite are sulfite salts such as sodium sulfite (Na₂SO₃) or potassium sulfite (K₂SO₃), preferably sodium hydrogen sulfite (NaHSO₃) or potassium hydrogen sulfite (KHSO₃), most preferably sodium metabisulfite (Na₂S₂O₅). Sulfite salts are typically used in the amounts necessary to provide sulfite in the required amounts. In the context of this invention sulfite and sulfite salts are sulfonating agents because the effect of the sulfite is to render the polymer sulfonated, so any other sulfonating agents capable of sulfonating the polymer may also be used.

The compositions of the instant invention preferably have a pH in the range of about 7 to about 10, more preferably about 8 to about 10. All pH values discussed herein may be measured using a pH meter as described in the Examples below. The compositions of the instant invention are preferably colorless or pale blue. A preferred color is often a positive indicator of the physical stability of the composition and/or an indicator that the process of the instant invention was practiced correctly, because colorless or pale blue compositions have been observed to provide preferred performance e.g. better performance than compositions having a red color, as shown in the Examples below. The color of the composition is determined without the addition of any extraneous color-altering substances.

"Total solids" is the percentage of the aqueous composition that is not volatilized on heating to constant weight at 105°C, by weight based on total weight. In many cases the only volatile substance is water, so the total solids is often the percentage of the aqueous composition that is not water, by weight based on total weight. The total solids concentration of the compositions of the instant invention varies over a broad range of about 15% to about 30%, preferably in the range of about 17% to about 25%, by weight based on total weight of said composition. The total solids concentration may be measured by thermogravimetric analysis at 105° C to constant weight or may be known from the nature of the process conditions.

The compositions of the instant invention have a delta turbidity value of greater than zero, preferably greater than about 10, most preferably greater than about 30, said delta turbidity value being determined by (1) measuring the turbidity of said composition at 25° C to obtain a first turbidity value, (2) diluting said composition with sufficient water to yield a second composition having a total solids concentration of 2%, by weight based on total weight of said second composition, (3) measuring the turbidity of said second composition at 25° C to obtain a second turbidity value, and (4) subtracting said first turbidity value from said second turbidity value. The turbidity of the composition may be measured by known techniques as described in the Examples below, in Nephelometric Turbidity Units (NTU).

A composition has a delta turbidity value of greater than zero when the composition becomes more turbid when it is diluted with sufficient water to yield a second composition having a total solids concentration of 2%, by weight based on total weight of said second composition. The instant inventors have discovered that compositions having a delta turbidity value of greater than zero, preferably greater than about 10, most preferably greater than about 30, generally provide better performance than compositions having a lower delta turbidity, e.g., a value of less than zero, as shown in the Examples below. Having a delta turbidity value of greater than zero may be a positive indicator of the physical or chemical stability of the composition and/or an indicator that the process of the instant invention was practiced correctly.

The bulk viscosity of the compositions of the instant invention may vary over a broad range, preferably about 5,000 mPa.s or less, more preferably less than 250 mPa.s, most preferably about 200 mPa.s or less, preferably about 30 mPa.s or greater, more preferably about 50 mPa.s or greater, most preferably about 60 mPa.s or greater. All bulk viscosity values discussed herein may be measured as described in the Examples below.

The processes described below may be used to prepare the compositions of the instant invention. The processes of the instant invention may be practiced in steps (a) to (f) as set forth below. The various constituents of the process, e.g., water, aminotriazine, aldehyde, sulfite, base, etc., are generally used in amounts effective to result in compositions having the total solids levels described above, in accordance with the constituent ratios described below.

Step (a) comprises heating and agitating a first mixture formed by intermixing water, aminotriazine, aldehyde, a first base, and a sulfite, in a aminotriazine:aldehyde molar ratio of about 1:2.9 to about 1:3.4 and a sulfite:aminotriazine molar ratio of about 0.9 to about 1.1, said first base being present in an amount effective tb provide said first mixture with a pH in the range of about 10 to about 13, preferably about 11 to about 12. The aminotriazine, aldehyde and sulfite may be as described above. The first base may be any base, preferably sodium hydroxide, ammonium hydroxide or potassium hydroxide, that may be added in an amount effective to provide said first mixture with a pH in the range of about 10 to about 13, preferably about 11 to about 12. The components, e.g., water, aminotriazine, aldehyde, first base, and sulfite, may each be added separately, in stages or all together. Preferably, the sulfite is added in the form of the corresponding amount of sulfite salt and, preferably, is not added more than 10 minutes after the other components. Most preferably, the sulfite is added together with the other components. The first mixture is generally heated and agitated at a temperature in the range of about 60° to about 80°C for about 1 to about 2 hours. Overheating is preferably avoided.

Step (b) comprises intermixing acid with the first mixture to give a second mixture having a pH in the range of about 3 to about 4. The acid is preferably an inorganic acid, more preferably hydrochloric acid, sulfurous acid, phosphoric acid or phosphorous acid, most preferably sulfuric acid. The acid is preferably an aqueous solution, most preferably a 15-25% solution in water, by weight based on total weight. The amount of acid intermixed may be determined by slowly adding the acid while monitoring the pH, so that the second mixture has a pH of about 3 to about 4, preferably about 3.1 to 3.7.

Step (c) comprises agitating the second mixture at a temperature in the range of about 50° to about 70°C until the second mixture has a bulk viscosity of about 15,000 mPa.s or greater, preferably about 20,000 mPa.s or greater. Since efficient agitation is preferred, agitation is generally continued until the bulk viscosity is about 50,000 mPa.s or less, preferably 40,000 mPa.s or less.

Step (d) comprises adding a second base to said second mixture with agitation in an amount sufficient to form a third mixture having a pH of about 7 to about 10, preferably about 8 to about 10. The second base may be any base, preferably sodium hydroxide, ammonium hydroxide or potassium hydroxide, that may be added in an amount effective to provide the third mixture with a pH in the range of about 7 to about 10, preferably about 8 to about 10. The amount of second base may be determined by slowly adding the second base while monitoring the pH, until the desired pH is reached. The base is preferably added in the form of an aqueous solution, most preferably a 15-25% aqueous solution, by weight based on total weight. Preferably, the second base is added slowly and with efficient mixing to the second mixture, so that the composition produced by the process is essentially colorless or pale blue. If the second base is added too quickly or with inadequate mixing, the composition formed by the process may have a less desirable red color. Compositions having a red color generally have a low delta turbidity value and may even have a delta turbidity value of less than zero. If the second base is added without agitation, the final product may not have the desired positive delta turbidity value. Step (e) comprises heating and agitating the third mixture at a temperature in the range of about 85° to about 95°C for about 10 to about 45 minutes, preferably about 15 to about 30 minutes. If step (e) is conducted without agitation, the final product may not have the desired positive delta turbidity value. Step (f) comprises cooling the third mixture to ambient temperature.

The compositions of the instant invention may be utilized as retention and/or drainage aids in papermaking, preferably as drainage aids. The instant methods for making paper comprise steps (i), (ii), (iii) and (iv) as described below. Step (i) comprises providing a composition of the instant invention as described herein, preferably a preferred composition of the instant invention as described herein. Step (ii) of the instant method comprises providing a first pulp slurry. In commercial papermaking practice, a pulp slurry may comprise 0.3 - 1.5% of cellulosic fibers, fines and fillers, by weight based on total weight, balance water.

Step (iii) of the instant method comprises intermixing the composition provided in step (i) with the first pulp slurry to form a second pulp slurry. In commercial papermaking practice, the intermixing is preferably performed by adding the composition to the first pulp sluny before the headbox of the papermaking machine. Most preferably, the composition is diluted with water before intermixing with the first pulp slurry. Other conventional paper additives may also be intermixed with the first or second pulp slurry, preferably alum and/or a cationic polyacrylamide. The amount of the composition of the invention intermixed with the pulp slurry may vary over a broad range from about 0.01 to about 5 pounds/ton of dry slurry, preferably from about 0.25 to about 2 pounds/ton of dry slurry, and is preferably used in an amount that is effective to improve retention and/or drainage. Performance as a drainage aid may be measured as described in the Examples below. Step (iv) of the instant method comprises dewatering the second pulp slurry to form a sheet. In commercial papermaking practice, the dewatering preferably occurs in several stages, e.g. in the forming zone, the vacuum zone, and in the press and dryer sections.

Using the instant compositions, improved drainage, formation and greater fines and filler retention values may be obtained in papermaking processes. The instant compositions may be added, in conjunction with other materials, as discussed below, to a conventional paper-making stock such as traditional chemical pulps, for instance, bleached and unbleached sulphate or sulphite pulp, mechanical pulp such as groundwood, thermomechanical or chemi-thermomechanical pulp or recycled pulp such as deinked waste and any mixtures thereof. The stock, and the final paper, can be substantially unfilled or filled, with amounts of up to about 50% filler, based on the dry weight of the stock, or up to about 40%, based on dry weight of paper, being exemplary. When filler is used any conventional filler such as calcium carbonate, clay, titanium dioxide or talc or a combination may be present. The filler, if present, may be incorporated into the stock before or after addition of the instant compositions. Other standard paper-making additives such as rosin size, synthetic size such as alkenyl succinic anhydride (ASA) and alkyl ketene dimer (AKD), alum, strength additives, promoters, polymeric coagulants such as low molecular weight cationic polymers, dye fixatives, etc. and other materials that are desirable in the paper-making process, may also be added.

When using cationic, high molecular weight polymer(s), or polysaccharides, and the instant compositions, the preferred sequence of addition is cationic, high molecular weight polymer and then the instant compositions. However, in some cases the reverse may be used. When a cationic polysaccharide such as starch and a cationic polymer are both used, they can be added separately or together, and in any order. Furthermore, their individual addition may be at more than one point. The instant compositions may be added before any cationic components or after them with the latter being the preferred method. Split addition may also be practiced. Preferred practice is to add cationic polysaccharide before high molecular weight cationic polymer. The furnish may already have cationic starch, alum, cationic (or anionic or both cationic and anionic) polymers of molecular weight equal or less than 100,000, sodium aluminate, and basic aluminum salts (e.g., polyaluminum chloride and/or sulfate) and their levels may be varied to improve the response of the furnish. Addition points are those typically used with dual retention & drainage systems (pre-fan pump or pre-screen for one component and pre- or post-screens for another). However, adding the last component before the fan pump may be warranted in some cases. Other addition points that are practical can be used if better performance or convenience is obtained. Thick stock addition of one component is also possible, although thin stock addition is preferred. However, thick stock and/or split thick and thin stock addition of cationic starch is routinely practiced and these addition modes are applicable with the use of the instant compositions as well. Addition points will be determined by practicality and by the possible need to put more or less shear on the treated system to ensure good mixing and distribution within the pulp slurry.

The compositions of the instant invention may also be useful in other applications e.g. as a cement additive, for the treatment of mineral slurries e.g. dewatering, and as a dispersant or flotation aid in mineral processing e.g. beneficiation of mineral ore. The instant compositions may be intermixed with mineral slurries at dosages that are effective to improve dewatering or flotation, preferably at a dosage of about 1 to about 100 grams per ton of dry slurry for dewatering applications and at a conditioning dosage of about 25 to about 200 grams per ton of dry slurry for flotation applications. The resulting slurries may then be dewatered or subjected to froth flotation in the general manner known to those skilled in the art. The instant compositions are especially useful on difficult-to-treat sulfide and non-sulfide mineral ores where deleterious slimes are a problem. They are also useful where the pH of the mineral slurry is less than about 5 and as drilling muds.

All patents and patent applications mentioned herein are hereby incorporated by reference. Unless otherwise stated, all percentages are by weight, based on total weight. The following Examples are provided for illustrative purposes and do not limit the scope of the instant invention in any way.

### EXAMPLES

### Test Methods

The following test methods were used throughout the Examples, unless otherwise stated:

Total solids were measured thermogravimetrically using a commercially available microwave solids oven (AVC 80, CEM Corporation of Matthews, NC) and pH was measured with a commercially available pH meter (American™ Porta/pH 3, American Scientific Products of McGaw Park, IL), used and calibrated in accordance with the manufacturer's instructions. Bulk viscosity of the final product was measured using a commercially available rotating cylinder viscometer (Brookfield DV-III Rheometer, spindle LV-1 at 30 rpm) at 20-25° C. Bulk viscosity during the process (in-process viscosity) was measured using a commercially available rotating cylinder viscometer (Brookfield DV-Ill Rheometer, spindle LV-4 at 6 rpm) by drawing a 200 mL sample and measuring the bulk viscosity within 30 to 50 seconds, i.e. at nearly the process temperature. Bulk viscosity values are reported in SI units of millipascal-seconds (mPa.s).

Delta turbidity values of the compositions of the invention were measured (in nephelometric turbidity units, NTU) using a commercially available 90° reflectance turbidimeter (Hach 2100P Turbidimeter) as follows: The turbidimeter was calibrated as recommended by the manufacturer. A first sample of the composition was added to a cuvette supplied with the turbidimeter and the turbidity of the first composition was determined and recorded as the first turbidity value. The first composition was then diluted and stirred with sufficient distilled water to yield a second composition having a total solids of 2%. The turbidity of the second composition was then determined and recorded as the second turbidity value. Delta turbidity was then calculated by subtracting the first turbidity value from the second turbidity value.

Drainage is a measure of the time required for water to drain from the stock and is here reported as 10X drainage (K. Britt, TAPPI 63(4) p. 67 (1980)). The instant compositions and comparative products were tested for their ability to function as drainage aids by the following drainage test procedure: A stock of 70/30 hardwood/softwood bleached kraft pulp was obtained and diluted if necessary to provide a test stock having a consistency (weight % solids) of about 0.3 to about 0.5%, a pH of about 4.5, and an alum content of 1% by weight, based on total weight of stock. The same test stock was used when comparing one drainage aid to another because comparisons using different test stocks may not be valid. Using a graduated cylinder, 1000 mL of test stock was added to a vaned Britt Jar and stirred at 1000 rpm. A dose of cationic polyacrylamide was added followed 30 seconds later by the drainage aid. After 15 seconds, stirring was stopped and the drainage was commenced. The 10X drainage time is the time (reported below in seconds) to collect 900 mL of water i.e. the stock consistency in the jar is increased by a factor of 10. A lower value of 10X drainage means faster drainage, i.e., better performance as a drainage aid.

### EXAMPLE 1

To a resin flask equipped with a stirrer and condenser were added 63.07 grams (g) of melamine, 122 g of 37% formaldehyde solution (containing about 4.6% methanol by weight) and 28.47 g of distilled water. The flask was heated to about 60-63°C and 10.95 g of a first 20% solution of sodium hydroxide was added with stirring. The pH was about 11. Within a few minutes the contents of the flask clarified and 159.2 g of 30% metabisulfite solution was added. The flask was heated at about 75° C for 80-90 minutes with stirring. The temperature did not exceed 80° C.

About 320 g of distilled water was then added with stirring to the flask, cooling the contents to about 65°C, followed by about 88.95 g of 20% sulfuric acid solution with stirring. The pH was about 3.3 and the in-process bulk viscosity was about 5-10 mPa.s. The temperature was maintained with stirring at about 65°C for about 140 minutes, until the in-process viscosity reached about 31,000 mPa.s.

About 67.25 g of a second 20% solution of sodium hydroxide was then added and stirred for about 20 minutes. The resin flask was then heated with thorough mixing to about 90°C and held for about 20 minutes with stirring, then cooled to ambient temperature. The product, a composition containing a sulfonated polymer of melamine and formaldehyde, had a bulk viscosity of about 150 mPa.s, a solids level of about 20%, a pH of about 8, and a delta turbidity of about 100 NTU. The product was nearly water-clear, with a slightly blue tinge.

### EXAMPLE 2

A sample of the composition of the instant invention was prepared in accordance with the procedure described in Example 1, except that the solids level was 27%, the bulk viscosity was 117 mPa.s, and the delta turbidity value was 30.7 NTU. The product was nearly water-clear, with a slightly blue tinge.

### EXAMPLES 3-4C

A sample of sulfonated melamine condensate was obtained commercially under the tradename Melvis F200® (believed to be representative of material prepared in accordance with U.S. 5,789,526). This commercial sample had a negative delta turbidity value of -142 NTU and a bulk viscosity of 2711 mPa.s (Brookfield LV-3 at 30 rpm and 23° C). The performance of this commercial sample was compared to the composition of Example 2 at dosages of 0.5, 1.0 and 2.0 lb/ton using the drainage test procedure described above and the results are shown in Table 1 below. These results show that the compositions of the instant invention, having a positive delta turbidity value, provided superior drainage as compared to a commercial sulfonated melamine product having a negative delta turbidity value.

**Table 1**

| **Example No.** | **Sample** | **Delta Turbidity (NTU)** | **10X Drainage (seconds)** | | |
|---|---|---|---|---|---|
| | | | **0.5 lb/ton** | **1.0 lb/ton** | **2.0 lb/ton** |
| 3 | Example 2 | 30.4 | 45 | 42 | 40 |
| 4C | Melvis F200® | -142 | 53 | 51 | 45 |

### EXAMPLE 5

A sample of the composition of the instant invention was prepared in accordance with the procedure described in Example 1, except that the solids level was about 29%, the bulk viscosity was 277 mPa.s, and the delta turbidity value was 73.3 NTU. The product was nearly water-clear, with a slightly blue tinge.

### EXAMPLES 6-7C

A sample of sulfonated melamine formaldehyde polycondensate was obtained commercially under the tradename Melment F15® (believed to be representative of material prepared in accordance with U.S. 3,941,734 or 3,985,696). This commercial sample had a delta turbidity value of -3.86 NTU and a bulk viscosity of 3 mPa.s (Brookfield LV-3 at 30 rpm and 23° C). The performance of this commercial sample was compared to the composition of Example 5 at dosages of 0.5, 1.0 and 1.5 lb/ton using the drainage test procedure described above and the results are shown in Table 2 below. These results show that the compositions of the instant invention, having a positive delta turbidity value, provided superior drainage as compared to a commercial sulfonated melamine product having a negative delta turbidity value.

**Table 2**

| **Example No.** | **Sample** | **Delta Turbidity (NTU)** | **10X Drainage (seconds)** | | |
|---|---|---|---|---|---|
| | | | **0.5 lb/ton** | **1.0 lb/ton** | **2.0 lb/ton** |
| 6 | Example 5 | 73.3 | 39 | 35 | 33 |
| 7C | Melment F-15® | -3.86 | 49 | 46 | 44 |

### EXAMPLE 8C

The process of Example 1 was followed except that, instead of adding the second base (20% solution of sodium hydroxide) and stirring before heating to about 90°C, the contents were heated as the sodium hydroxide solution was being added. The resulting product had a red color and a delta turbidity value of -0.4 NTU.

### EXAMPLES 9-10C

The performance of the composition of Example 8C was compared to the performance of the composition of Example 2 at dosages of 0.5, 1.0 and 2.0 lb/ton using the drainage test procedure described above and the results are shown in Table 3 below. These results show the detrimental effect of failing to add the second base with agitation before heating.

**Table 3**

| **Example No.** | **Sample** | **Delta Turbidity (NTU)** | **10X Drainage (seconds)** | | |
|---|---|---|---|---|---|
| | | | **0.5 lb/ton** | **1.0 lb/ton** | **2.0 lb/ton** |
| 9 | Example 2 | 30.7 | 66 | 61 | 63 |
| 10C | Example 8C | -0.4 | 71 | 72 | 70 |

### EXAMPLES 11-12C

A sample of a commercially available melamine-formaldehyde resin was obtained from Cytec Industries, Inc. under the tradename PARAMEL HE® resin. This commercial resin is not sulfonated. This commercial sample had a delta turbidity value of 30.7. The performance of this commercial sample was compared to the performance of the composition of Example 2 at dosages of 0.5, 1.0 and 2.0 lb/ton using the drainage test procedure described above and the results are shown in Table 4 below. These results show that the compositions of the instant invention, which are sulfonated and have a positive delta turbidity value, provided superior drainage as compared to a commercial melamine-formaldehyde product that also had a positive delta turbidity value but was not sulfonated.

**Table 4**

| **Example No.** | **Sample** | **Delta Turbidity (NTU)** | **10X Drainage (seconds)** | | |
|---|---|---|---|---|---|
| | | | **0.5 lb/ton** | **1.0 lb/ton** | **2.0 lb/ton** |
| 11 | Example 2 | 30.7 | 71 | 68 | 61 |
| 12C | PARAMEL HE® resin | 30.7 | 85 | 81 | 90 |

### EXAMPLES 13-14C

A sample of a commercially available microbead polymer was obtained from Cytec Industries, Inc. under the tradename POLYFLEX CP.3®. This commercial product is not a sulfonated polymer of an aminotriazine and an aldehyde. The performance of this commercial sample was compared to the performance of the composition of Example 2 at dosages of 0.5, 1.0 and 2.0 Ib/ton using the drainage test procedure described above and the results are shown in Table 5 below. These results show that the compositions of the instant invention provide superior drainage performance as compared to a state-of-the-art commercial drainage aid.

**Table 5**

| **Example No.** | **Sample** | **10X Drainage (seconds)** | | |
|---|---|---|---|---|
| | | **0.5 lb/ton** | **1.0 lb/ton** | **2.0 lb/ton** |
| 13 | Example 2 | 59 | 52 | 47 |
| 14C | POLYFLEX CP.3® micropolymer | 77 | 69 | 67 |

### EXAMPLES 15C-17C

Three melamine-advanced sulfonated melamine formaldehyde condensate products were prepared in accordance with preparation examples (D1), (D2) and (D3) of WO 96/34027 and corresponding U.S. 5,989,391. The delta turbidity values of these three samples were measured as described above and are shown in Table 6 below. None of the three samples had a positive delta turbidity value.

**Table 6**

| **Example No.** | **Delta Turbidity (NTU)** |
|---|---|
| 15C (D1) | -16.9 |
| 16C (D2) | - 15.3 |
| 17C (D3) | - 21.5 |

### EXAMPLES 18-20C

The drainage performance of the melamine-advanced sulfonated melamine formaldehyde condensate products prepared in Examples 16C and 17C were compared to the performance of the composition of Example 5 at a dosage of 2.0 lb/ton. The results are shown in Table 7 below and demonstrate that the compositions of the instant invention provide superior drainage performance as compared to melamine-advanced products.

**Table 7**

| **Example No.** | **Sample** | **10X Drainage (seconds)** |
|---|---|---|
| 18 | Example 3 | 36 |
| 19C | 16C | 55 |
| 20C | 17C | 70 |

## Claims

1. An aqueous composition comprised of a sulfonated polymer of an aminotriazine and an aldehyde, said composition having a total solids concentration in the range of about 15% to about 30%, by weight based on total weight of said composition, and a delta turbidity value of greater than zero, said delta turbidity value being determined by (1) measuring the turbidity of said composition at 25° C to obtain a first turbidity value, (2) diluting said composition with sufficient water to yield a second composition having a total solids concentration of 2%, by weight based on total weight of said second composition, (3) measuring the turbidity of said second composition at 25° C to obtain a second turbidity value, and (4) subtracting said first turbidity value from said second turbidity value.

2. A composition as claimed in Claim 1 having a pH in the range of about 7 to about 10.

3. A composition as claimed in Claim 1 wherein said aminotriazine is melamine and said aldehyde is formaldehyde.

4. A composition as claimed in Claim 1 having a total solids concentration in the range of about 17% to about 25%, by weight based on total weight of said composition.

5. A composition as claimed in Claim 1, having a bulk viscosity of about 5,000 mPa.s or less.

6. A composition as claimed in Claim 1, having a delta turbidity value of about 30 nephelometric turbidity units (NTU) or greater.

7. A process for making the composition of Claim 1, comprising (a) heating and agitating a first mixture, made by intermixing water, aminotriazine, aldehyde, a first base, and a sulfite, in a aminotriazine:aldehyde molar ratio of about 1:2.9 to about 1:3.4 and a sulfite:aminotriazine molar ratio of about 0.9 to about 1.1, said first base being present in an amount effective to provide said first mixture with a pH in the range of about 10 to about 13, at a temperature in the range of about 60° to about 80°C for about 1 to about 2 hours, (b) intermixing acid with said first mixture to give a second mixture having a pH in the range of about 3 to about 4, (c) agitating said second mixture at a temperature in the range of about 50° to about 70°C until said second mixture has a bulk viscosity of about 15,000 mPa.s or greater, (d) adding a second base to said second mixture with agitation in an amount sufficient to form a third mixture having a pH of about 7 to about 10, (e) heating and agitating said third mixture at a temperature in the range of about 85° to about 95°C for about 15 to about 30 minutes, and (f) cooling said third mixture to ambient temperature.

8. A process as claimed in Claim 7, wherein said aminotriazine is melamine and said aldehyde is formaldehyde and said first base or said second base is sodium hydroxide or potassium hydroxide

9. A process as claimed in Claim 7, wherein said second base is added slowly and with efficient mixing to said second mixture, so that said composition produced by said process is essentially colorless or pale blue.

10. A method for treating a mineral slurry, comprising (i) providing an aqueous composition as claimed in Claim 1, (ii) providing a first mineral slurry, (iii) intermixing said composition with said first mineral slurry to form a second mineral slurry, in an amount effective to improve dewatering, and (iv) dewatering said second mineral slurry.

11. A method for beneficiating a mineral ore, comprising (i) providing an aqueous composition as claimed in Claim 1, (ii) providing a first mineral slurry, (iii) conditioning said first mineral slurry with said composition to form a second mineral slurry, in an amount effective to improve flotation, and (iv) subjecting said second mineral slurry to froth flotation conditions.

12. A method for making paper, comprising (i) providing an aqueous composition as claimed in Claim 1, (ii) providing a first pulp slurry, (iii) intermixing said composition with said first pulp slurry to form a second pulp slurry, and (iv) dewatering said second pulp slurry to form a sheet.

## Patentansprüche

1. Wässrige Zusammensetzung, die ein sulfoniertes Polymer eines Aminotriazins und eines Aldehyds umfasst, wobei die Zusammensetzung eine Gesamt-Feststoffkonzentration im Bereich von etwa 15 Gew.-% bis etwa 30 Gew.-% aufweist, basierend auf dem Gesamtgewicht der Zusammensetzung, und einen Delta-Trübungswert größer als Null, wobei der Delta-Trübungswert bestimmt wird durch (1) Messen der Trübung der Zusammensetzung bei 25 °C, um einen ersten Trübungswert zu erhalten, (2) Verdünnen der Zusammensetzung mit ausreichend Wasser, um eine zweite Zusammensetzung mit einer Gesamt-Feststoffkonzentration von 2 Gew.-%, basierend auf dem Gesamtgewicht der zweiten Zusammensetzung, zu erhalten, (3) Messen der Trübung der zweiten Zusammensetzung bei 25 °C, um einen zweiten Trübungswert zu erhalten, und (4) Subtrahieren des ersten Trübungswertes vom zweiten Trübungswert.

2. Zusammensetzung gemäß Anspruch 1 mit einem pH-Wert im Bereich von etwa 7 bis etwa 10.

3. Zusammensetzung gemäß Anspruch 1, wobei das Aminotriazin Melamin ist und der Aldehyd Formaldehyd ist.

4. Zusammensetzung gemäß Anspruch 1 mit einer Gesamt-Feststoffkonzentration im Bereich von etwa 17 Gew.-% bis etwa 25 Gew.-%, basierend auf dem Gesamtgewicht der Zusammensetzung.

5. Zusammensetzung gemäß Anspruch 1 mit einer Volumenviskosität von etwa 5000 mPa·s oder weniger.

6. Zusammensetzung gemäß Anspruch 1 mit einem Delta-Trübungswert von etwa 30 nephelometrischen Trübungseinheiten (NTU) oder mehr.

7. Verfahren zum Herstellen der Zusammensetzung nach Anspruch 1, umfassend (a) Erwärmen und Bewegen eines ersten Gemisches, das hergestellt ist durch Vermischen von Wasser, Aminotriazin, Aldehyd, einer ersten Base und eines Sulfits in einem Molverhältnis Aminotriazin:Aldehyd von etwa 1:2,9 bis etwa 1:3,4 und einem Molverhältnis Sulfit:Aminotriazin von etwa 0,9 bis etwa 1,1, wobei die erste Base in einer Menge vorliegt, die ausreichend ist das erste Gemisch mit einem pH-Wert im Bereich von etwa 10 bis etwa 13 zu versehen, bei einer Temperatur im Bereich von etwa 60 °C bis etwa 80 °C für etwa 1 bis etwa 2 Stunden, (b) Vermischen von Säure mit dem ersten Gemisch, um ein zweites Gemisch mit einem pH-Wert im Bereich von etwa 3 bis etwa 4 zu erzeugen, (c) Bewegen des zweiten Gemisches bei einer Temperatur im Bereich von etwa 50 °C bis etwa 70 °C, bis das zweite Gemisch eine Volumenviskosität von etwa 15000 mPa·s oder größer aufweist, (d) Hinzufügen einer zweiten Base zu dem zweiten Gemisch unter Bewegen in ausreichender Menge, um ein drittes Gemisch mit einem pH-Wert von etwa 7 bis etwa 10 zu bilden, (e) Erwärmen und Bewegen des dritten Gemisches bei einer Temperatur im Bereich von etwa 85 °C bis etwa 95 °C für etwa 15 bis etwa 30 Minuten, und (f) Abkühlen des dritten Gemisches auf Umgebungstemperatur.

8. Verfahren gemäß Anspruch 7, wobei das Aminotriazin Melamin ist und der Aldehyd Formaldehyd ist und die erste Base oder die zweite Base Natriumhydroxid oder Kaliumhydroxid ist.

9. Verfahren gemäß Anspruch 7, wobei die zweite Base dem zweiten Gemisch langsam und unter wirksamem Vermischen hinzugefügt wird, derart, dass die durch das Verfahren erzeugte Zusammensetzung im Wesentlichen farblos oder blassblau ist.

10. Verfahren zum Behandeln eines Mineralschlamms, umfassend (i) Bereitstellen einer wässrigen Lösung gemäß Anspruch 1, (ii) Bereitstellen eines ersten Mineralschlamms, (iii) Vermischen der Zusammensetzung mit dem ersten Mineralschlamm, um einen zweiten Mineralschlamm zu bilden, in einer wirksamen Menge, um die Entwässerung zu verbessern, und (iv) Entwässern des zweiten Mineralschlamms.

11. Verfahren zum Anreichern eines mineralischen Erzes, umfassend (i) Bereitstellen einer wässrigen Zusammensetzung gemäß Anspruch 1, (ii) Bereitstellen eines ersten Mineralschlamms, (iii) Aufbereiten des ersten Mineralschlamms mit der Zusammensetzung, um einen zweiten Mineralschlamm zu bilden, in einer Menge, die wirksam ist, die Flotation zu verbessern, und (iv) Aussetzen des zweiten Mineralschlamms an Schaumflotationsbedingungen.

12. Verfahren zur Papierherstellung, umfassend (i) Bereitstellen einer wässrigen Zusammensetzung gemäß Anspruch 1, (ii) Bereitstellen einer ersten Pulpeschlämme, (iii) Vermischen der Zusammensetzung mit der ersten Pulpeschlämme, um eine zweite Pulpeschlämme zu bilden, und (iv) Entwässern der zweiten Pulpeschlämme, um einen Bogen zu bilden.

## Revendications

1. Composition aqueuse à base d'un polymère sulfoné d'une aminotriazine et d'un aldéhyde, ladite composition ayant une concentration totale en solides dans la plage d'environ 15 % à environ 30 % en poids par rapport au poids total de ladite composition, et un indice delta de turbidité supérieur à zéro, ledit indice delta de turbidité étant déterminé (1) en mesurant la turbidité de ladite composition à 25 °C pour obtenir un premier indice de turbidité, (2) en diluant ladite composition avec suffisamment d'eau pour obtenir une deuxième composition ayant une concentration totale en solides de 2 % en poids par rapport au poids total de ladite deuxième composition, (3) en mesurant la turbidité de ladite deuxième composition à 25 °C pour obtenir un deuxième indice de turbidité, et (4) en soustrayant ledit premier indice de turbidité du dit deuxième indice de turbidité.

2. Composition telle que revendiquée dans la revendication 1, ayant un pH dans la plage d'environ 7 à environ 10.

3. Composition telle que revendiquée dans la revendication 1, dans laquelle ladite aminotriazine est la mélamine et ledit aldéhyde est le formaldéhyde.

4. Composition telle que revendiquée dans la revendication 1, ayant une concentration totale en solides dans la plage d'environ 17 % à environ 25 % en poids par rapport au poids total de ladite composition.

5. Composition telle que revendiquée dans la revendication 1, ayant une viscosité apparente d'environ 5 000 mPa.s ou moins.

6. Composition telle que revendiquée dans la revendication 1, ayant un indice delta de turbidité d'environ 30 unités de turbidité néphélométriques (NTLT) ou plus.

7. Procédé de préparation de la composition de la revendication 1, comprenant (a) un chauffage et une agitation d'un premier mélange préparé en mélangeant ensemble de l'eau, de l'aminotriazine, de l'aldéhyde, une première base et un sulfite, selon un rapport molaire aminotriazine:aldéhyde d'environ 1:2,9 à environ 1:3,4, et un rapport molaire sulfite:aminotriazine d'environ 0,9 à environ 1,1, ladite première base étant présente selon une quantité efficace pour conférer au dit premier mélange, un pH dans la plage d'environ 10 à environ 13, à une température dans la plage d'environ 60 à environ 80 °C pendant environ 1 à environ 2 heures, (b) un mélange avec ledit premier mélange pour obtenir un deuxième mélange ayant un pH dans la plage d'environ 3 à environ 4, (c) une agitation dudit deuxième mélange à une température dans la plage d'environ 50 à environ 70 °C jusqu'à ce que ledit deuxième mélange ait une viscosité apparente d'environ 15 000 mPa.s ou plus, (d) une addition d'une deuxième base dans ledit deuxième mélange en agitant, selon une quantité suffisante pour former un troisième mélange ayant un pH d'environ 7 à environ 10, (e) un chauffage et une agitation du dit troisième mélange à un température dans la plage d'environ 85 à environ 95 °C pendant environ 15 à environ 30 minutes, et (f) un refroidissement du dit troisième mélange jusqu'à la température ambiante.

8. Procédé tel que revendiqué dans la revendication 7, dans lequel ladite aminotriazine est la mélamine et ledit aldéhyde est le formaldéhyde, et où ladite première base ou ladite deuxième base est de l'hydroxyde de sodium ou de l'hydroxyde de potassium.

9. Procédé tel que revendiqué dans la revendication 7, dans lequel ladite deuxième base est ajoutée lentement et en mélangeant efficacement dans ledit deuxième mélange, ce pourquoi ladite composition produite par ledit procédé est à peu près incolore ou bleu pâle.

10. Procédé de traitement d'une suspension de minéral, comprenant (i) la fourniture d'une composition aqueuse telle que revendiquée dans la revendication 1, (ii) la fourniture d'une première suspension de minéral, (iii) un mélange de ladite composition avec ladite première suspension de minéral pour former une deuxième suspension de minéral, selon une quantité efficace pour améliorer le dessèchement, et (iv) un dessèchement de ladite deuxième suspension minérale.

11. Procédé d'enrichissement d'un minerai, comprenant (i) une fourniture d'une composition aqueuse telle que revendiquée dans la revendication 1, (ii) une fourniture d'une première suspension de minéral, (iii) un conditionnement de ladite première suspension de minéral avec ladite composition pour former une deuxième suspension de minéral, en une quantité efficace pour améliorer la flottation, et (iv) une soumission de ladite deuxième suspension de minéral à des conditions de flottation par écumage.

12. Procédé de fabrication de papier, comprenant (i) la fourniture d'une composition aqueuse telle que revendiquée dans la revendication 1, (ii) la fourniture d'une première suspension de pâte, (iii), un mélange mutuel de ladite composition avec ladite première suspension de pâte pour former une deuxième suspension de pâte, et (iv) un dessèchement de ladite deuxième suspension de pâte pour former une feuille.
